# EUROPÄISCHE PATENTSCHRIFT

(11) **EP 3 365 390 B1**
(45) Veröffentlichungstag und Bekanntmachung des Hinweises auf die Patenterteilung: **17.06.2020**
(21) Anmeldenummer: 16784499.2
(22) Anmeldetag: 20.10.2016
(51) Int. Cl.: C08L 69/00

(54) **VERFAHREN ZUR HERSTELLUNG VON POLYCARBONAT-FORMMASSEN MIT VERBESSERTER THERMISCHER VERARBEITUNGSSTABILITÄT**
METHOD FOR THE PREPARATION OF POLYCARBONATE MOULDING COMPOSITIONS WITH IMPROVED THERMAL PROCESSING STABILITY
PROCEDE DE FABRICATION DE MASSES DE FORMAGE EN POLYCARBONATE AYANT UNE STABILITE AU TRAITEMENT THERMIQUE AMELIOREE

(30) Priorität: 23.10.2015 EP 15191306
(43) Veröffentlichungstag der Anmeldung: 29.08.2018
(73) Patentinhaber: Covestro Deutschland AG, 51373 Leverkusen (DE)
(72) Erfinder: SEIDEL, Andreas, 41542 Dormagen (DE); HUFEN, Ralf, 47239 Duisburg (DE); THIEM, Hans-Jürgen, 41539 Dormagen (DE); SIMON, Joachim, 41515 Grevenbroich (DE)
(74) Vertreter: Levpat
(86) Internationale Anmeldenummer: PCT/EP2016/075236
(87) Internationale Veröffentlichungsnummer: WO 2017/068045

(56) Entgegenhaltungen:
- EP-A1- 1 893 691

## Beschreibung

Die vorliegende Erfindung betrifft ein Compoundierungsverfahren zur Herstellung von schlagzähmodifizierten Polycarbonat-Zusammensetzungen.

Die vorliegende Erfindung betrifft auch Polycarbonat-Zusammensetzungen, die Verwendung dieser Zusammensetzungen zur Herstellung von Formkörpern und Formkörper enthaltend diese Zusammensetzungen sowie die Verwendung von Säuremischungen zur Stabilisierung von schlagzähmodifizierten Polycarbonat-Zusammensetzungen.

Bei der Herstellung von schlagzähmodifizierten Polycarbonat-Zusammensetzungen kommen oft Komponenten zum Einsatz, die eine Polycarbonat zersetzende Wirkung haben oder Bestandteile mit Polycarbonat zersetzender Wirkung enthalten, bei denen aber eine weitere Aufarbeitung (Reinigung) verfahrenstechnisch nicht sinnvoll, nicht möglich oder aus wirtschaftlichen Gründen nicht gewollt ist.

Bei den Bestandteilen mit Polycarbonat zersetzender Wirkung, die in den zur Herstellung von schlagzähmodifizierten Polycarbonat-Zusammensetzungen zum Einsatz kommenden Komponenten enthalten sein können, handelt es sich beispielsweise um herstellungsbedingte Verunreinigungen und/oder um den Komponenten zugesetzte Additive.

Im Rahmen der Erfindung sind im Folgenden unter Komponenten mit Polycarbonat zersetzender Wirkung solche Komponenten zu verstehen, die diese Wirkung selbst aufweisen und auch solche Komponenten, die Polycarbonat zersetzende Bestandteile enthalten.

Die Polycarbonat zersetzende Wirkung der Komponenten kann beispielsweise durch in diesen Komponenten enthaltene funktionelle Gruppen ausgelöst werden. Solche Gruppen haben beispielsweise eine alkalische Wirkung. Beispiele für solche funktionellen Gruppen sind Aminogruppen und Hydroxylgruppen.

Beispielsweise weisen viele handelsüblichen Füllstoffe wie beispielsweise Talk oder andere handelsübliche Polymeradditive wie beispielsweise einige Antistatika (beispielsweise Polyetheramide), Gleit- und Entformungsmittel (beispielsweise Ethylenbisstearamid), Stabilisatoren (beispielsweise als Lichtschutzmittel zum Einsatz kommende Benzotriazole oder sterisch gehinderte Amine), Pigmente (beispielsweise Titandioxid), Stickstoff-enthaltende organische Farbstoffe (beispielsweise Azoverbindungen oder Pyrazolone) und Stickstoff-enthaltende Flammschutzmittel (beispielsweise Phosphonatamine) eine Polycarbonat zersetzende Wirkung auf. Außerdem enthalten auch die Schlagzähmodifikatoren selbst, die bei der Herstellung/Compoundierung von schlagzähmodifizierten Polycarbonat-Zusammensetzungen verwendet werden, herstellungsbedingt oft Bestandteile mit Polycarbonat zersetzender Wirkung. Dazu zählen beispielsweise Polymerisationshilfsstoffe, beispielsweise Emulgatoren, oder in den Aufarbeitungsprozessen von Emulsionspolymerisationen eingesetzte Fällmittel. Auch das Polycarbonat selbst kann herstellungsbedingt Bestandteile mit Polycarbonat zersetzender Wirkung enthalten, wie beispielsweise in der Wäsche zum Einsatz kommendes Natriumhydroxid oder alkalische Polymerisationskatalysatoren.

Die Komponenten mit Polycarbonat zersetzender Wirkung können bei hohen Temperaturen, wie sie typischerweise bei der Herstellung und Verarbeitung der Polycarbonat-Formmassen auftreten, eine katalytisch induzierte Reduzierung des Polycarbonat Molekulargewichts auslösen. Ein solcher Polycarbonatabbau äußert sich oft in einer Schädigung der Eigenschaften der Formmassen oder durch Oberflächenveränderungen. Dadurch wird die Auswahl der möglichen Komponenten für solche Polycarbonat-Zusammensetzungen sehr stark eingeschränkt.

Aus dem Stand der Technik ist es bekannt, schlagzähmodifizierten Polycarbonat-Zusammensetzungen zur Verminderung der schädlichen Wirkung von Komponenten mit Polycarbonat zersetzender Wirkung saure Verbindungen zuzusetzen.

US 2006/0287422 A1 beschreibt thermoplastische Zusammensetzungen enthaltend Polycarbonat, mineralischen Füllstoff und eine Säure oder ein saures Salz, sowie optional weitere thermoplastische Polymere als Blendpartner, beispielsweise ausgewählt aus der Gruppe enthaltend Polyester und (kautschukmodifizierte) Vinylcopolymere. Die Anmeldung offenbart, dass durch den Zusatz der Säure oder des sauren Salzes der thermisch induzierte Polycarbonatmolekulargewichtsabbau reduziert und die Schlagzähigkeit und Duktilität dadurch verbessert wird.

EP 1 893 691 A1 offenbart Zusammensetzungen enthaltend aromatisches Polycarbonat, aromatischen Polyester, Füllstoff, kautschukhaltige Copolymere und Stabilisatoren sowie deren Herstellung. Als Stabilisator wird u.a. eine wässrige Lösung von Phosphorsäure verwendet. Die Zusammensetzungen eignen sich zur Herstellung von Formkörpern mit guten mechanischen Eigenschaften und guter Oberflächengüte.

EP 0 576 950 A2 und WO 2007/065579 A1 beschreiben basische Verunreinigungen enthaltende Polycarbonat-ABS-Zusammensetzungen, die mit organischen Carbonsäuren stabilisiert werden.

In der WO 2010/063381 A1 werden schlagzähmodifizierte Polycarbonat-Zusammensetzungen mit verbesserter Kombination aus Hydrolyse- und Verarbeitungsstabilität beschrieben enthaltend Polycarbonat, ein basisch verunreinigtes Emulsionspfropfpolymerisat und eine saure Phosphorverbindung mit mindestens einer P-OH-Funktionalität.

WO 2009/118114 A1 offenbart schlagzähmodifizierte Polycarbonat-Zusammensetzungen mit verbesserter Kombination aus hellem Rohton sowie guter Hydrolyse- und Verarbeitungsstabilität enthaltend Polycarbonat, kautschukmodifiziertes Pfropfpolymerisat enthaltend herstellungsbedingte Rückstände eines Fettsäuresalz-Emulgators, wobei das Pfropfpolymerisat in wässriger Dispersion einen pH-Wert von größer als 7 aufweist, und ein saures Additiv. Als saure Additive werden in dieser Anmeldung hydroxyfunktionalisierte Mono- und Polycarbonsäuren sowie Phosphorsäure und Natrium- und Kaliumsalze der Phosphorsäure offenbart.

WO 2013/060687 A1 offenbart schlagzähmodifizierte Polycarbonat-Zusammensetzungen mit gutem Rohton, verbesserter Thermostabilität und verbesserter Verarbeitungsstabilität, gemessen an der Stabilität des Glanzgrades unter Variation der Verarbeitungstemperatur, enthaltend eine Brönsted-saure Verbindung aufgezogen auf einem anorganischen oder organischen Adsorber oder Absorber. Beispielhaft werden als Brönstedt-saure Verbindung Phosphorsäure, phosphorige Säure, Phosphinsäure sowie deren alkylierte bzw. arylierte Derivate offenbart.

WO 2013/060685 A1 offenbart ein Verfahren zur Herstellung stabilisierter schlagzähmodifizierter Polycarbonat-Zusammensetzungen, bei welchem eine saure Verbindung in einer hochverdünnten wässrigen Lösung auf ein Pfropfpolymerpulver aufgezogen wird, bevor dieses so mit der wässrigen Säurelösung angefeuchtete Pulver in die Compoundierung eingebracht wird.

Die Verwendung der im Stand der Technik beschriebenen Säuren in Verfahren zur Herstellung von schlagzähmodifizierten Polycarbonat-Zusammensetzungen mit guter Verarbeitungsstabilität bei der thermischen Umformung führt aber bei der Herstellung der Zusammensetzungen durch Compoundierung im Allgemeinen zu Polycarbonatmolekulargewichtsabbau, sofern im Herstellverfahren hohe Temperaturen eingesetzt werden. Die zur Erhöhung der Anlagenkapazität erwünschte Erhöhung des Durchsatzes bei der Compoundierung führt aber eben zu solchen hohen Prozesstemperaturen. Das heißt, dass bei Einsatz der im Stand der Technik beschriebenen Säuren die realisierbaren Durchsätze in der Regel limitiert sind. Darüber hinaus ist es bei der Compoundierung zur Erzielung einer optimalen Aufschmelzung der polymeren Komponenten der Zusammensetzung sowie einer optimalen Dispergierung aller Komponente, welche zur Erzielung optimaler Materialeigenschaften, zum Beispiel maximaler Duktilität, anzustreben ist, oft erforderlich, die Verfahrensparameter so zu wählen, dass ein hoher spezifischer, das heißt auf die durchgesetzte Produktmenge bezogener Energieeintrag resultiert. Dieses ist beispielsweise durch Auswahl geeigneter Schneckenkonfigurationen und/oder durch Reduktion des Drehmomentes bei einem definierten Durchsatz möglich. Somit ist verständlich, dass Verfahren zur Herstellung von schlagzähmodifizierten Polycarbonat-Zusammensetzungen, die zur Erzielung ausreichender Verarbeitungsstabilität der Zusammensetzungen bei der thermischen Umformung auf niedrigere Verfahrenstemperaturen beschränkt sind, sowohl aus ökonomischer als auch technischer Sicht nachteilhaft sind. Weiterhin führt der Zusatz von Säuren gemäß dem Stand der Technik auch häufig zu nachteiligen Eigenschaften bei den Polycarbonat-Zusammensetzungen wie starken Molekulargewichtsabbau oder Auftreten von Oberflächendefekten unter feucht-warmen Lagerungsbedingungen, Verschlechterung des Rohtons und/oder starker Veränderung des Oberflächenglanzes bei hohen Verarbeitungstemperaturen.

Es war somit wünschenswert, ein Verfahren zur Herstellung von schlagzähmodifizierten Polycarbonat-Zusammensetzungen, optional unter Einsatz von Komponenten mit Polycarbonat zersetzender Wirkung, bereitzustellen, welches sich auch bei hohen Prozesstemperaturen zur Herstellung von Zusammensetzungen mit vorteilhaften Eigenschaften eignet. Diese im Verfahren hergestellten Zusammensetzungen sollten sich üblicherweise durch eine gute thermische Verarbeitungsstabilität in nachgeschalteten thermischen Umformungsprozessen gemessen am Abbau des Polycarbonat-Molekulargewichtes auszeichnen und sich üblicherweise zur Herstellung von Formkörpern mit einer im Allgemeinen guten Oberflächenqualität (wenigen Oberflächendefekten) nach Wärme-Feucht-Lagerung eignen. Bevorzugt sollten die nach den Verfahren hergestellten Zusammensetzungen weiterhin eine gute Hydrolysestabilität, gemessen am Abbau des Polycarbonat-Molekulargewichtes unter feucht-warmen Lagerungsbedingungen, und einen hellen, über ein bevorzugt weites Prozessfenster bei der thermischen Umformung stabilen Rohton zeigen sowie die aus den Zusammensetzungen hergestellten Formkörper bevorzugt einen hohen Glanz aufweisen.

Unter hohen Prozesstemperaturen bei der Herstellung der schlagzähmodifizierten Polycarbonat-Zusammensetzungen im Sinne der zuvor genannten Aufgabenstellung sind Temperaturen gemessen in der Schmelze am Düsenkopf des Compoundierungsaggregats von beispielsweise 290°C bis 310°C zu verstehen.

Ein Gegenstand der vorliegenden Erfindung ist daher ein Verfahren zur Herstellung von schlagzähmodifizierten Polycarbonat-Zusammensetzungen enthaltend die Schritte (i), (ii) und optional (iii), wobei
(i) in einem ersten Schritt
   A) 10 bis 98 Gew.-Teile, bevorzugt 30 bis 97 Gew.-Teile, besonders bevorzugt 40 bis 95 Gew.-Teile, ganz besonders bevorzugt 50 bis 80 Gew.-Teile mindestens eines Polymers ausgewählt aus der Gruppe der aromatischen Polycarbonate und aromatischen Polyestercarbonate,
   B) 0,001 bis 0,3 Gew.- Teile, bevorzugt 0,005 bis 0,2 Gew.- Teile, besonders bevorzugt 0,01 bis 0,1 Gew.- Teile, ganz besonders bevorzugt 0,02 bis 0,07 Gew.- Teile mindestens einer organischen, das heißt Kohlenstoff und Wasserstoff enthaltenden Brönsted-Säure,
   C) 0,0001 bis 0,004 Gew-Teile, bevorzugt 0,0005 bis 0,004 Gew.-Teile, besonders bevorzugt 0,001 bis 0,004 Gew.-Teile, ganz besonders bevorzugt 0,002 bis 0,004 Gew.-Teile mindestens einer anorganischen, das heißt kein Kohlenstoff enthaltenden brönsted-sauren Phosphorverbindung,
   D) 1 bis 90 Gew.-Teile, bevorzugt 3 bis 70 Gew.-Teile, besonders bevorzugt 5 bis 60 Gew.-Teile, ganz besonders bevorzugt 7 bis 50 Gew.-Teile mindestens eines kautschukhaltigen Vinyl(co)polymerisats,
   E) optional bis zu 90 Gew.-Teile, bevorzugt bis zu 70 Gew.-Teile, besonders bevorzugt bis zu 60 Gew.-Teile, ganz besonders bevorzugt bis zu 50 Gew.-Teile mindestens eines Polyesters,
   F) bis zu bis 30 Gew.-Teile, bevorzugt bis zu 25 Gew.-Teile, besonders bevorzugt 0,1 bis 20 Gew.-Teile, ganz besonders bevorzugt 0,2 bis 10 Gew.-Teile mindestens eines Additivs,
   wobei optional mindestens eine der im Verfahrensschritt (i) eingesetzten Komponenten eine Polycarbonat zersetzende Wirkung aufweist,
   wobei das Verhältnis der Gewichtsanteile der im Verfahrensschritt (i) eingesetzten Komponenten B zu C im Bereich von 2 bis 100, bevorzugt im Bereich von 3 bis 60, besonders bevorzugt im Bereich von 5 bis 50, weiter bevorzugt im Bereich von 8 bis 30 liegt,
   durch Zuführung thermischer und/oder mechanischer Energie aufgeheizt, mindestens die Komponenten A) und D) dadurch aufgeschmolzen und alle eingesetzten Komponenten dadurch miteinander vermischt, ineinander gelöst oder ineinander dispergiert werden,
   und
   in weiteren Schritten (ii) und optional (iii)
   die aus Verfahrensschritt (i) resultierende Schmelze (ii) durch Abkühlen wieder verfestigt und (iii) optional granuliert wird,
   wobei die Verfahrensschritte (ii) und (iii) in beliebiger Reihenfolge zueinander durchgeführt werden können.

Das heißt, es kann bei Verfahren, bei denen sowohl die Schritte (ii) als auch (iii) zum Einsatz kommen, entweder zunächst die Schmelze abgekühlt und dadurch verfestigt und anschließend granuliert werden, oder aber alternativ die Schmelze geschnitten und danach durch Abkühlung verfestigt werden.

Als Beispiel für die zuerst genannte Ausführungsform sei die Stranggranulation, als Beispiel für die alternative Ausführungsform die Unterwassergranulation genannt.

Beim Verfahrensschritt (i) handelt es sich in einer Ausführungsform um eine Compoundierung unter Einsatz beispielsweise eines Einwellenextruders mit oder ohne Knetstiften, eines Innenkneters, eines Co-Kneters, eines Planetwalzenextruders, eines Ringextruders oder eines gleich- oder gegenläufig rotierenden, dicht kämmenden oder tangierenden Zwei- oder Mehrwellenextruders.

In einer weiteren Ausführungsform handelt es sich beim Verfahrensschritt (i) um eine Compoundierung unter Einsatz eines Co-Kneters, eines gleichläufig rotierenden Zwei- oder Mehrwellenextruders oder eines Ringextruders.

In einer besonderen Ausführungsform erfolgt die Compoundierung gemäß Verfahrensschritt (i) in einem gleichläufig rotierenden, dichtkämmenden Doppelwellenextruder.

In einer speziellen Ausführungsform wird im Verfahrensschritt (i) die resultierende, als Schmelze vorliegende Zusammensetzung durch Anlegen eines Unterdrucks entgast.

In einer Ausführungsform enthält das Verfahren die Schritte (i), (ii) und (iii). Bevorzugt ist ein Verfahren bestehend aus den Schritten (i), (ii) und (iii).

In Schritt (i) können neben den Komponenten A), B), C), D, E) und F) optional weitere Komponenten zum Einsatz kommen. Die Komponenten A), B), C), D, E) und F) machen zusammen mindestens 80 Gew.-% aller in Schritt (i) eingesetzten Komponenten aus.

In einer bevorzugten Ausführungsform kommen in Schritt (i) keine weiteren Komponenten außer A), B), C), D), E) und F) zum Einsatz.

In einer weiteren bevorzugten Ausführungsform kommt in Schritt (i) die Komponente E) nicht zum Einsatz.

In einer weiteren Ausführungsform kommt in Schritt (i) die Komponente E) zum Einsatz und gleichzeitig ist die Komponente D) durch einen Gelgehalt von mindestens 70 Gew.-%, bevorzugt mindestens 80 Gew.-%, besonders bevorzugt mindestens 90 Gew.-%, jeweils gemessen als in Aceton unlöslicher Anteil und bezogen auf die Komponente D), gekennzeichnet.

In einer weiteren Ausführungsform enthält mindestens eine der in Verfahrensschritt (i) eingesetzten Komponenten, insbesondere mindestens eine der Komponenten ausgewählt aus der Gruppe bestehend aus den Komponenten A, D und E, ganz besonders die Komponente D ein Alkali-, Erdalkali-, Aluminium- oder Übergangsmetallsalz, insbesondere ein Erdalkalisalz einer starken Mineralsäure, beispielsweise ein Chlorid-, Sulfat- oder Nitrat-Salz. In speziellen Ausführungsformen handelt es sich bei den Erdalkalisalzen um Magnesiumsulfat oder Calciumchlorid, insbesondere um Magnesiumsulfat.

In einer weiteren Ausführungsform werden die Komponenten B und C in Summe in der minimal zur Erreichung der gewünschten Verarbeitungsstabilität notwendigen Menge eingesetzt. Diese Menge hängt von Art und Mengen der in der jeweiligen Zusammensetzung zum Einsatz kommenden Komponenten mit Polycarbonat zersetzender Wirkung ab und ist insofern nicht allgemein zu beziffern sondern für die jeweilige Zusammensetzung durch eine Reihe von Versuchen mit unterschiedlicher Gesamtmenge an Komponenten B und C experimentell zu ermitteln.

In einer weiteren Ausführungsform werden die Komponenten B und C in solchen Konzentrationen eingesetzt, dass die im erfindungsgemäßen Verfahren hergestellten schlagzähmodifizierten Polycarbonat-Zusammensetzungen die freie Säure gemäß mindestens einer der Komponenten B und C enthalten.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 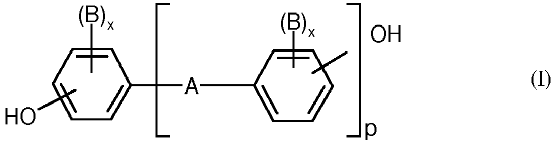 wobei
- A: eine Einfachbindung, C₁ bis C₅-Alkylen, C₂ bis C₅-Alkyliden, C₅ bis C₆-Cycloalkyliden, - O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 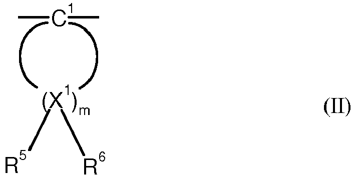 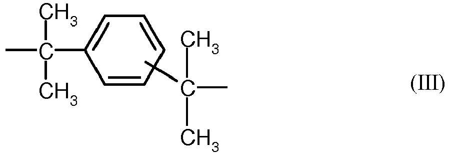
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methylbenzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

In einer bevorzugten Ausführungsform weist die Komponente A ein gewichtsgemitteltes Molekulargewicht Mw (ermittelt durch Gelpermeationschromatographie (GPC) in Methylenchlorid mit Polycarbonat als Standard) von 15000 g/mol bis 50000 g/mol, bevorzugt von 22000 g/mol bis 35000 g/mol, insbesondere von 24000 bis 32000 g/mol auf.

Als Komponente A kann ein Polycarbonat oder Polyestercarbonat oder eine Mischung mehrerer Polycarbonate und/oder Polyestercarbonate gemäß der Beschreibung zuvor zum Einsatz kommen.

### Komponente B

Bei der Komponente B handelt es sich um eine brönsted-saure organische, d.h. Kohlenstoff und Wasserstoff enthaltene Verbindung.

Bei der Komponente B handelt es sich bevorzugt um eine Verbindung ausgewählt aus der Gruppe bestehend aus Ethylendiamintetraessigsäure (EDTA), Nitriloessigsäure, Ethylenglycol-bis(aminoethylether)-N,N,N',N'-tetraessigsäure (EGTA), Diethylentriaminpentaessigsäure (DTPA), Phenylphosphonsäure, p-Toluolsulfonsäure und Substanzen der Formel (IV), bevorzugt um Ethylendiamintetraessigsäure (EDTA) oder Substanzen der Formel (IV), besonders bevorzugt um Substanzen der Formel (IV) 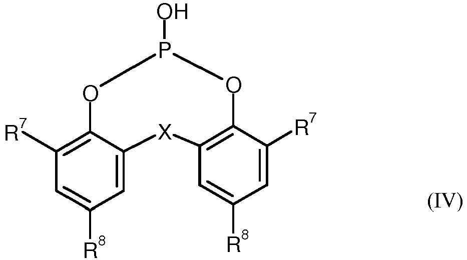 worin
- R⁷ und R⁸: gleich oder verschieden sind und für C₁-C₉-Alkyl, C₅-C₆-Cycloalkyl, C₇-C₉-Aralkyl oder C₆-C₁₀-Aryl stehen und
- X: für -S- oder R⁹-CH mit R⁹ für Wasserstoff, C₁-C₆-Alkyl oder C₅-C₆-Cycloalkyl steht.

Die Phosphorigsäureester der Formel (IV) können in bekannter Weise hergestellt werden durch Umsetzung von Triphenylphosphit mit entsprechenden Dihydroxyverbindungen in Gegenwart von Wasser (vgl. z.B. DE-A 29 29 229).

Unter den Verbindungen der Formel (IV) ist besonders bevorzugt der Phosphorigsäureester, worin X für Methylen, R⁷ für Cyclohexyl und R⁸ für Methyl stehen (Formel (V)).

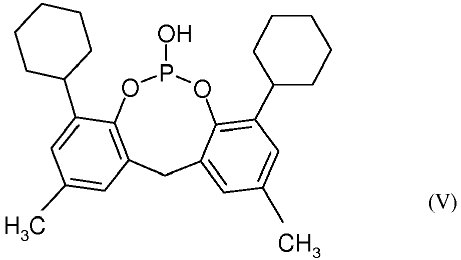

Besonders bevorzugt werden als Komponente B Ethylendiamintetraessigsäure (EDTA) oder die Verbindung gemäß Formel (V) eingesetzt, am meisten bevorzugt die Verbindung gemäß Formel (V).

### Komponente C

Bei der Komponente C handelt es sich um eine anorganische, d.h. Kohlenstoff-freie saure Phosphorverbindung. Beispiele für solche erfindungsgemäßen Phosphorverbindungen sind Phosphorsäure, phosphorige Säure und Phosphinsäure und deren Oligomere, Polymere sowie sauer wirkende Salze.

Als Komponente C kommt bevorzugt phosphorige Säure (H₃PO₃) zum Einsatz.

Weiter bevorzugt wird H₃PO₃ als Feststoff mit einem Wassergehalt von nicht mehr als 5 Gew.-%, besonders bevorzugt von nicht mehr als 2 Gew.-% eingesetzt.

In einer weiter bevorzugten Ausführungsform wird H₃PO₃ mit einem Wassergehalt von 0,01 bis 5 Gew.-%, am meisten bevorzugt mit einem Wassergehalt von 0,05 bis 2 Gew.-% eingesetzt.

### Komponente D

Die Komponente D besteht aus D1 und/oder D2 sowie optional zusätzlich D3.

### Komponente D1

Bei der Komponente D1 handelt es sich um Pfropfpolymerisate, hergestellt im Emulsionspolymersiationsverfahren, von

D1.1) 5 bis 95 Gew.-%, vorzugsweise 10 bis 70 Gew.-%, besonders bevorzugt 20 bis 60 Gew.-%, bezogen auf die Komponente D1, einer Mischung aus

D1.1.1) 65 bis 85 Gew.-%, bevorzugt 70 bis 80 Gew.-%, bezogen auf D1.1, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und Methacrylsäure-(C1-C8)-Alkylester (wie beispielsweise Methylmethacrylat, Ethylmethacrylat) und

D1.1.2) 15 bis 35 Gew.-%, bevorzugt 20 bis 30 Gew.-%, bezogen auf D1.1, mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)
auf
D1.2) 95 bis 5 Gew.-%, vorzugsweise 90 bis 30 Gew.-%, besonders bevorzugt 80 bis 40 Gew.-%, bezogen auf die Komponente D1, wenigstens einer Pfropfgrundlage.

Die Pfropfgrundlage hat bevorzugt eine Glasübergangstemperatur < 0°C, weiter bevorzugt < - 20°C, besonders bevorzugt <-60°C.

Glasübergangstemperaturen werden, soweit in der vorliegenden Erfindung nicht anders angegeben, mittels dynamischer Differenzkalorimetrie (DSC) gemäß der Norm DIN EN 61006 bei einer Heizrate von 10 K/min mit Definition der Tg als Mittelpunkttemperatur (Tangentenmethode) und Stickstoff als Schutzgas bestimmt.

Die Pfropfpartikel in der Komponente D1 weisen bevorzugt eine mittlere Teilchengröße (D50-Wert) von 0,1 bis 0,8 µm, vorzugsweise von 0,15 bis 0,6 µm, besonders bevorzugt von 0,2 bis 0,5 µm auf.

Die mittlere Teilchengröße D50 ist der Durchmesser, oberhalb und unterhalb dessen jeweils 50 Gew.-% der Teilchen liegen.

Die Pfropfpartikelteilchengrößenverteilung und daraus abgeleitete Werte werden mittels Ultrazentrifugenmessung (W. Scholtan, H. Lange, Kolloid, Z. und Z. Polymere 250 (1972), 782-796) bestimmt.

In bevorzugter Ausführungsform enthält das Emulsionspfropfpolymerisat gemäß Komponente D1 weniger als 15 Gew.-%, besonders bevorzugt weniger als 10 Gew.-%, ganz besonders bevorzugt weniger als 5 Gew.-%, bezogen auf den Gelanteil des Polymerisats, Pfropfpartikel mit einem Partikeldurchmesser von über 800 nm.

Bevorzugte Monomere D1.1.1 sind ausgewählt aus mindestens einem der Monomere Styrol, α-Methylstyrol und Methylmethacrylat, bevorzugte Monomere D1.1.2 sind ausgewählt aus mindestens einem der Monomere Acrylnitril, Maleinsäureanhydrid und Methylmethacrylat.

Besonders bevorzugte Monomere sind D1.1.1 Styrol und D1.1.2 Acrylnitril.

Für die Pfropfpolymerisate D1 geeignete Pfropfgrundlagen D1.2 sind beispielsweise Dienkautschuke, Dien-Vinyl-Blockcopolymer-Kautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Mischungen aus solchen Kautschuken bzw. Silikon-Acrylat-Kompositkautschuke, in denen die Silikon- und die Acrylatkomponenten chemisch miteinander (z.B. durch Pfropfung) verbunden sind oder sich so gegenseitig durchdringen, dass sie sich nicht wesentlich voneinander trennen lassen.

Bevorzugte Pfropfgrundlagen D1.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß D1.1.1 und D1.1.2) und Mischungen aus den zuvor genannten Kautschuktypen. Besonders bevorzugt sind reiner Polybutadienkautschuk und Styrol-Butadien-Blockcopolymerkautschuk.

Der Gelanteil der Pfropfpolymerisate beträgt mindestens 15 Gew.-%, bevorzugt mindestens 60 Gew.-%, besonders bevorzugt mindestens 75 Gew.-% (gemessen in Aceton).

Der Gelgehalt der Pfropfpolymerisate wird, soweit in der vorliegenden Erfindung nicht anders angegeben, bei 25°C als in Aceton als Lösungsmittel unlöslicher Anteil bestimmt (M. Hoffmann, H. Krömer, R. Kuhn, Polymeranalytik I und II, Georg Thieme-Verlag, Stuttgart 1977).

Die Pfropfpolymerisate D1 werden hergestellt durch radikalische Polymerisation.

Das Pfropfpolymerisat D1 umfasst herstellungsbedingt im Allgemeinen freies, d.h. nicht chemisch an die Kautschukgrundlage gebundenes Copolymerisat aus D1.1.1 und D1.1.2, das in geeigneten Lösungsmitteln (z.B. Aceton) löslich ist.

### Komponente D2

Bei der Komponente D2 handelt es sich um Pfropfpolymerisate, hergestellt im Masse-, Lösungs- oder Suspensionspolymerisationsverfahren, von
D2.1) 5 bis 95 Gew.-%, vorzugsweise 80 bis 93 Gew.-%, besonders bevorzugt 85 bis 92 Gew.-%, ganz besonders bevorzugt 87 bis 93 Gew.-%, bezogen auf die Komponente D2, einer Mischung aus
D2.1.1) 65 bis 85 Gew.-%, bevorzugt 70 bis 80 Gew.-%, bezogen auf die Mischung D.2.1, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und Methacrylsäure-(C1-C8)-Alkylester (wie beispielsweise Methylmethacrylat, Ethylmethacrylat) und
D2.1.2) 15 bis 35 Gew.-%, bevorzugt 20 bis 30 Gew.-% bezogen auf die Mischung D2.1, mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)
auf D2.2) 95 bis 5 Gew.-%, vorzugsweise 20 bis 7 Gew.-%, besonders bevorzugt 15 bis 8 Gew.-%, ganz besonders bevorzugt 13 bis 7 Gew.-%, bezogen auf die Komponente D2, wenigstens einer Pfropfgrundlage.

Die Pfropfgrundlage hat vorzugsweise eine Glasübergangstemperatur < 0°C, bevorzugt < -20°C, besonders bevorzugt < -60°C.

Die Pfropfpartikel in der Komponente D2 weisen bevorzugt eine mittlere Teilchengröße (D50-Wert) von 0,1 bis 2 µm, vorzugsweise von 0,2 bis 1 µm, besonders bevorzugt von 0,3 bis 0,7 µm auf.

Die Pfropfpartikelteilchengrößenverteilung und daraus abgeleitete Werte werden mittels Ultrazentrifugenmessung (W. Scholtan, H. Lange, Kolloid, Z. und Z. Polymere 250 (1972), 782-796) bestimmt.

In bevorzugter Ausführungsform enthält das Pfropfpolymerisat gemäß Komponente D2 weniger als 40 Gew.-%, besonders bevorzugt weniger als 30 Gew.-%, insbesondere weniger als 20 Gew.-%, bezogen auf den Gelanteil des Pfropfpolymersiats, Pfropfpartikel mit einem Partikeldurchmesser von über 800 nm.

Bevorzugte Monomere D2.1.1 sind ausgewählt aus mindestens einem der Monomere Styrol, α-Methylstyrol und Methylmethacrylat, bevorzugte Monomere D2.1.2 sind ausgewählt aus mindestens einem der Monomere Acrylnitril, Maleinsäureanhydrid und Methylmethacrylat.

Besonders bevorzugte Monomere sind D2.1.1 Styrol und D2.1.2 Acrylnitril.

Bevorzugte Pfropfgrundlagen D2.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß D2.1.1 und D2.1.2) und Mischungen aus den zuvor genannten Kautschuktypen. Besonders bevorzugt als Pfropfgrundlage D2.2 sind Polybutadienkautschuk, Styrol-Butadien-Blockcopolymerkautschuke und Mischungen von Styrol-Butadien-Blockcopolymerkautschuken mit Polybutadienkautschuk.

Der Gelanteil der Pfropfpolymerisate D2 beträgt vorzugsweise 10 bis 40 Gew.-%, besonders bevorzugt 15 bis 30 Gew.-%, ganz besonders bevorzugt 17 bis 23 Gew.-% (gemessen in Aceton).

Besonders bevorzugte Polymerisate D2 sind z.B. ABS-Polymerisate hergestellt durch radikalische Polymerisation, welche in bevorzugter Ausführungsform bis zu 10 Gew.-%, besonders bevorzugt bis zu 5 Gew.-%, besonders bevorzugt 2 bis 5 Gew.-%, jeweils bezogen auf das Pfropfpolymerisat D2, an n-Butylacrylat enthalten.

Das Pfropfpolymerisat D2 umfasst im Allgemeinen herstellungsbedingt freies, d.h. nicht chemisch an die Kautschukgrundlage gebundenes Copolymerisat aus D2.1.1 und D2.1.2, welches sich dadurch auszeichnet, dass es in geeigneten Lösungsmittel (z.B. Aceton) gelöst werden kann.

Bevorzugt enthält die Komponente D2 freies Copolymerisat aus D2.1.1 und D2.1.2, welches ein gewichtsgemitteltes Molekulargewicht (Mw), bestimmt per Gelpermeationschromatographie mit Polystyrol als Standard, von bevorzugt 50000 bis 200000 g/mol, besonders bevorzugt von 70000 bis 160000 g/mol, besonders bevorzugt von 80000 bis 120000 g/mol aufweist.

### Komponente D3

Bei Komponente D3 handelt es sich um (Co)Polymerisate aus mindestens einem Monomeren aus der Gruppe der Vinylaromaten, Vinylcyanide (ungesättigte Nitrile), (Meth)Acrylsäure-(C1 bis C8)-Alkylester, ungesättigte Carbonsäuren sowie Derivate (wie Anhydride und Imide) ungesättigter Carbonsäuren.

Insbesondere geeignet sind als Komponente D3 (Co)Polymerisate aus
D3.1 50 bis 99 Gew.-%, bevorzugt 65 bis 85 Gew.-%, besonders bevorzugt 70 bis 80 Gew.-% bezogen auf das (Co)Polymerisat D3 mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat) und
D3.2 1 bis 50 Gew.-%, bevorzugt 15 bis 35 Gew.-%, besonders bevorzugt 20 bis 30 Gew.-% bezogen auf das (Co)Polymerisat D3 mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate D3 sind harzartig, thermoplastisch und kautschukfrei. Besonders bevorzugt ist das Copolymerisat aus D3.1 Styrol und D3.2 Acrylnitril.

Derartige (Co)Polymerisate D3 sind bekannt und lassen sich durch radikalische Polymerisation, insbesondere durch Emulsions-, Suspensions-, Lösungs- oder Massepolymerisation herstellen. Die (Co)Polymerisate D3 besitzen ein gewichtsgemitteltes Molekulargewicht (Mw), bestimmt per Gelpermeationschromatographie mit Polystyrol als Standard, von bevorzugt 50000 bis 200000 g/mol, besonders bevorzugt von 70000 bis 150000 g/mol, besonders bevorzugt von 80000 bis 120000 g/mol.

### Komponente E

Die erfindungsgemäß als Komponente E in Frage kommenden Polyester sind aliphatische oder aromatische Polyester, bevorzugt aromatische Polyester und in besonders bevorzugter Ausführungsform Polyalkylenterephthalate. Es handelt sich hierbei in besonders bevorzugter Ausführungsform um Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Besonders bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen bevorzugt eine Viskositätszahl von 0,4 bis 1,5 dl/g, vorzugsweise 0,5 bis 1,2 dl/g, gemessen in Phenol/o-Dichlorbenzol (1:1 Gewichtsteile) in einer Konzentration von 0,05g/ml gemäß ISO 307 bei 25°C im Ubbelohde-Viskosimeter. Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente F

Als Komponente F können ein oder mehrere weitere von den Komponenten A, B, C, D und E verschiedene Additive eingesetzt werden, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Verträglichkeitsvermittlern, weiteren Schlagzähigkeitsmodifikatoren, weiteren polymeren Bestandteilen (beispielsweise funktionelle Blendpartner), Füll- und Verstärkungsstoffen (beispielsweise Karbonfasern, Talk, Glimmer, Kaolin, CaCO₃) sowie Farbstoffen und Pigmenten (beispielsweise Titandioxid oder Eisenoxid).

In bevorzugter Ausführungsform wird mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren von Komponente D verschiedenen Schlagzähigkeitsmodifikatoren, weiteren polymeren Bestandteilen, Farbstoffen und Pigmenten, eingesetzt.

In besonders bevorzugter Ausführungsform wird mindestens ein Polymeradditiv ausgewählt aus der Gruppe bestehend aus Gleit- und Entformungsmitteln, Stabilisatoren, Fließfähigkeitspromotoren, Verträglichkeitsvermittlern, weiteren von Komponente D verschiedenen Schlagzähigkeitsmodifikatoren, weiteren polymeren Bestandteilen, Farbstoffen und Pigmenten und keine weitere Polymeradditive eingesetzt.

In bevorzugter Ausführungsform wird als Entformungsmittel Pentaerythrittetrastearat eingesetzt.

In bevorzugter Ausführungsform wird als Stabilisator mindestens ein Vertreter ausgewählt aus der Gruppe bestehend aus sterisch gehinderten Phenolen, organischen Phosphiten und Schwefelbasierten Co-Stabilisatoren eingesetzt.

In besonders bevorzugter Ausführungsform wird als Stabilisator mindestens ein Vertreter ausgewählt aus der Gruppe bestehend aus Octadecyl 3-(3,5-di-tert-butyl-4-hydroxyphenyl) propionat und Tris(2,4-di-tert-butylphenyl)phosphit eingesetzt.

In speziell bevorzugter Ausführungsform wird als Stabilisator eine Kombination aus Octadecyl 3-(3,5-di-tert-butyl-4-hydroxyphenyl)propionat und Tris(2,4-di-tert-butylphenyl)phosphit eingesetzt.

In einer weiter bevorzugten Ausführungsform wird als Entformungsmittel Pentaerythrittetrastearat, als Stabilisator eine Kombination aus Octadecyl 3-(3,5-di-tert-butyl-4-hydroxyphenyl)propionat und Tris(2,4-di-tert-butylphenyl)phosphit optional mindestens ein Pigment oder Farbmittel und keine weiteren Polymeradditive eingesetzt.

Die nach dem erfindungsgemäßen Verfahren hergestellten Zusammensetzungen (Formmassen) können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Die nach dem erfindungsgemäßen Verfahren hergestellten Zusammensetzungen eignen sich besonders auch zur Herstellung von Formkörpern oder Formteilen mit Class-A-Oberflächen-Anforderung und Hochglanz-Finish, welche gegebenenfalls partiell oder vollständig einem weiteren Oberflächenbehandlungsschritt durch beispielsweise Lackierung, Folienhinterspritzung, Metallisierung durch Vakuumbedampfung oder Galvanisierung unterzogen werden können.

Unter "hochglänzend" verstanden wird im Sinne der vorliegenden Erfindung ein Glanzgrad ermittelt in Reflexion gemäß DIN 67530 bei einem Messwinkel von 60° von mindestens 95, bevorzugt von mindestens 97, besonders bevorzugt von mindestens 99. Gegenstand der Erfindung sind somit auch Formkörper oder Formteile enthaltend mindestens eine der erfindungsgemäßen Zusammensetzungen mit vollständigem oder partiellen Hochglanz-Finish, welche gegebenenfalls partiell oder vollständig einem weiteren Oberflächenbehandlungsschritt durch beispielsweise Lackierung, Folienhinterspritzung, Metallisierung durch Vakuumbedampfung oder Galvanisierung unterzogen wurden.

Gegenstand der Erfindung sind auch die nach dem erfindungsgemäßen Verfahren hergestellten Zusammensetzungen und auch Formkörper oder Formteile enthaltend nach dem erfindungsgemäßen Verfahren hergestellte Zusammensetzungen.

### Beispiele

Eingesetzte Komponenten:

### Komponente A

Lineares Polycarbonat auf Basis Bisphenol-A mit einem gewichtsgemittelten Molekulargewicht Mw von 25500 g/mol (bestimmt durch Gelpermeationschromatographie (GPC) in Methylchlorid als Lösungsmittel und mit Polycarbonat als Standard).

### Komponente B

Phosphorigsäureester des Bis-(2-hydroxy-3-cyclohexyl-5-methyl-phenyl)-methans

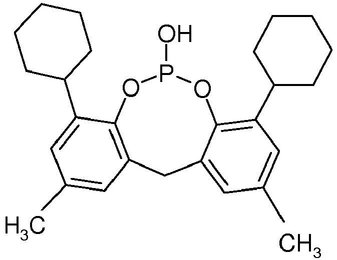

### Komponente C

Phosphorige Säure (99 %), Sigma-Aldrich Chemie GmbH

### Komponente D

ABS-Abmischung mit einem Verhältnis von Acrylnitril : Butadien : Styrol, bezogen auf die Abmischung, von 19:24:57 Gew.-%, enthaltend ein in Emulsionspolymerisation hergestelltes, unter Verwendung von Magnesiumsulfat gefälltes, in basischem Milieu aufgearbeitetes und basische Verunreinigungen sowie Magnesiumsulfat enthaltendes ABS-Polymerisat gemäß Komponente D1, ein in Massepolymerisation hergestelltes ABS-Polymerisat gemäß Komponente D2 und ein SAN-Polymerisat gemäß Komponente D3.

### Komponente F1

Pentaerythrittetrastearat als Gleit-/Entformungsmittel

### Komponente F2

Thermostabilisator, Irganox® B900 (Gemisch aus 80% Irgafos® 168 (Tris(2,4-di-tert-butyl-phenyl)-phosphit) und 20% Irganox® 1076 (2,6-Di-tert-butyl-4-(octadecanoxycarbonylethyl)-phenol); BASF (Ludwigshafen, Deutschland)

### Komponente F3

Thermostabilisator, Irganox® 1076 (2,6-Di-tert-butyl-4-(octadecanoxycarbonylethyl)-phenol); BASF (Ludwigshafen, Deutschland)

### Komponente F4

Ruß, Black Pearls 800, Cabot Corporation (USA)

### Verfahren zur Herstellung von Zusammensetzungen (Formmassen) aus den eingesetzten Komponenten

Im ersten Verfahrensschritt (i) wurden die Komponenten A, B, C, D und F in die Einzugszone eines Zweiwellenextruders (ZSK133SC) der Fa. Coperion, Werner & Pfleiderer (Stuttgart, Deutschland) gegeben, mit einem spezifischen Energieeintrag am Extruderantrieb von 145 Wh/kg in der Aufschmelze- und Knetzone des Extruders auf eine Temperatur von ca. 300°C gebracht und dadurch aufgeschmolzen, bei dieser Temperatur geknetet und dadurch die plastifizierten Komponenten ineinander dispergiert. Dabei wurden eine Drehzahl von 355 min⁻¹ und ein Durchsatz von 5000 kg/h verwendet. Die so compoundierte Mischung wurde in der folgenden Entgasungszone des Extruders durch Anlegen eines Unterdrucks von 200 mbar (absolut) an die Schmelze entgast. Im zweiten und dritten Verfahrensschritt (ii) und (iii) wurde die entgaste Schmelze über eine Düse aus dem Extruder mit einer Temperatur von ca. 300°C ausgetragen und durch Unterwassergranulation granuliert, abgekühlt und dadurch verfestigt.

### Herstellung der Prüfkörper und Prüfung

Die Beurteilung der Neigung zur Ausbildung oberflächiger Defekte mit Bläschentopologie (**Blistering**) erfolgte an Platten der Abmessung 150 mm x 105 mm x 3,2 mm, die auf einer Spritzgussmaschine (Fa. Arburg) bei einer Schmelzetemperatur von 260°C und einer Werkzeugtemperatur von 80°C hergestellt wurden. Hierbei kam ein beidseitig hochglanzpoliertes Spritzgusswerkzeug zum Einsatz. Die so hergestellten Platten wiesen vor der Wärme-Feucht-Lagerung keinerlei oberflächige Defekte mit Bläschentopologie auf. Das **Blistering** wurde visuell ohne Verwendung vergrößernder technischer Hilfsmittel (Mikroskope, Lupen, etc.) beurteilt nach einer dreitägigen Feucht-Warm-Lagerung dieser Platten bei 40°C und einer relativen Luftfeuchte von >95%. Dabei wurden alle visuell sichtbaren Bläschen-Defekte auf beiden Seiten von insgesamt zwei Platten mit den zuvor definierten Abmessungen (d.h. auf einer effektiven Oberfläche von 4 · 15 cm ·10,5 cm = 630 cm²) ausgezählt. Unter dieser rein visuellen Begutachtung ohne vergrößernde technische Hilfsmittel werden der Erfahrung nach alle Defekte mit einem Durchmesser ab etwa 100-200 µm berücksichtigt.

Der **MVR** dient als Maß für etwaigen Polycarbonatmolekulargewichtsabbau bei der thermischen Belastung während der Compoundierung und wurde an den durch Compoundierung hergestellten Pellets nach Trocknung bei 100°C für 4 h in einem Umlufttrockner nach ISO1133 bei einer Schmelzetemperatur von 300°C mit einer Stempellast von 2,16 kg nach einer Haltezeit von 5 min ermittelt.

Der **iMVR** wurde unter denselben Bedingungen wie der MVR, jedoch mit verlängerter Haltezeit von 15 min bestimmt. Die Differenz aus iMVR und MVR dient als Indikation für einen bei hohen Schmelzetemperaturen im Spritzguss zu erwartenden, thermisch induzierten Polycarbonatmolekulargewichtsabbau und somit als Maß für die Verarbeitungsstabilität im Spritzguss.

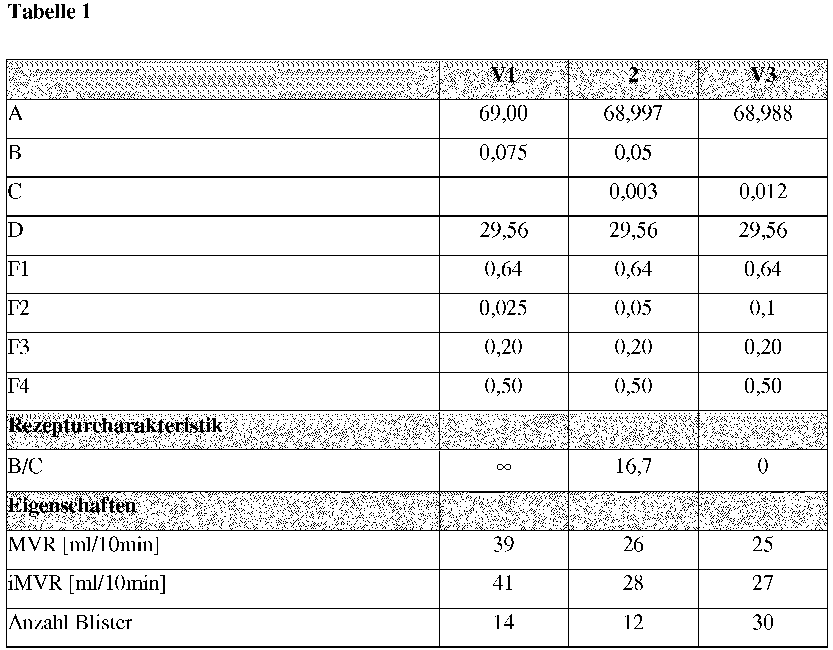

Die Beispiele in Tabelle 1 zeigen, dass nur das erfindungsgemäße Verfahren (Beispiel 2), bei dem eine Kombination aus organischer saurer Verbindung und einer im Vergleich zur Einsatzkonzentration der organischen sauren Verbindung relativ kleinen Menge einer anorganischen sauren Verbindung zum Einsatz kam, zu den gewünschten Eigenschaften führt. Überraschend ist hier insbesondere, dass trotz geringerer Einsatzkonzentration an sowohl organischer Säure gegenüber Vergleichsbeispiel V1 und anorganischer Säure gegenüber Vergleichsbeispiel V3 sowie auch einer geringeren Säuregesamtkonzentration gegenüber beiden Vergleichsbeispielen V1 und V3 eine gute thermische Stabilität resultiert.

Das Verfahren unter Verwendung von ausschließlich organischer Säure (V1) führt zu erhöhtem thermisch induzierten Polycarbonatmolekulargewichtsabbau schon während der Compoundierung, obwohl bereits eine höhere Konzentration an Säure als in dem erfindungsgemäßen Beispiel 2 zum Einsatz kommt. Die in dem erfindungsgemäßen Beispiel 2 eingesetzte Menge an organischer Säure reicht insofern allein nicht zur Inhibierung des thermisch induzierten Polycarbonatmolekulargewichtsabbaus während der Compoundierung aus.

Die Verwendung von ausschließlich anorganischer Säure (V3) führt zu mangelhaftem Blistering-Verhalten selbst bei sehr kleiner Einsatzmenge. Diese wurde so gewählt, dass sie in der gewählten Zusammensetzung gerade noch ausreichend ist, den thermisch induzierten Polycarbonatmolekulargewichtsabbau während der Compoundierung und bei der weiteren thermischen Verarbeitung sicher zu inhibieren.

## Patentansprüche

1. Verfahren zur Herstellung von schlagzähmodifizierten Polycarbonat-Zusammensetzungen enthaltend die Schritte (i), (ii) und optional (iii), wobei
(i) in einem ersten Schritt
A) 10 bis 98 Gew.-Teile mindestens eines Polymers ausgewählt aus der Gruppe der aromatischen Polycarbonate und aromatischen Polyestercarbonate,
B) 0,001 bis 0,3 Gew.- Teile mindestens einer organischen, Brönsted-Säure,
C) 0,0001 bis 0,004 Gew-Teile mindestens einer anorganischen, brönsted-sauren Phosphorverbindung,
D) 1 bis 90 Gew.-Teile mindestens eines kautschukhaltigen Vinyl(co)polymerisats,
E) optional bis zu 90 Gew.-Teile mindestens eines Polyesters,
F) optional bis zu 30 Gew.-Teile mindestens eines Additivs,
wobei das Verhältnis der Gewichtsanteile der im Verfahrensschritt (i) eingesetzten Komponenten B zu C im Bereich von 2 bis 100 liegt,
durch Zuführung thermischer und/oder mechanischer Energie aufgeheizt, mindestens die Komponenten A) und D) dadurch aufgeschmolzen und alle eingesetzten Komponenten dadurch miteinander vermischt, ineinander gelöst oder ineinander dispergiert werden,
und
in einem weiteren Schritt (ii)
die aus Verfahrensschritt (i) resultierende Schmelze (ii) durch Abkühlen wieder verfestigt und (iii) optional granuliert wird,
wobei die Verfahrensschritte (ii) und (iii) in beliebiger Reihenfolge zueinander durchgeführt werden können.

2. Verfahren gemäß Anspruch 1, **dadurch gekennzeichnet, dass** die Komponente B im Schritt (i) in einem Anteil von 0,01 bis 0,1 Gew.- Teilen bezogen auf die Summe der Gewichtsteile der Komponenten A bis F zum Einsatz kommt.

3. Verfahren gemäß Anspruch 1 oder 2, **dadurch gekennzeichnet, dass** die Komponente C im Schritt (i) in einem Anteil von 0,002 bis 0,004 Gew.-Teile bezogen auf die Summe der Gewichtsteile der Komponenten A bis F zum Einsatz kommt.

4. Verfahren gemäß einem der vorherigen Ansprüche, **dadurch gekennzeichnet, dass** das Verhältnis der Komponenten B zu C im Bereich von 8 bis 30 liegt.

5. Verfahren gemäß einem der vorherigen Ansprüche, **dadurch gekennzeichnet, dass** Komponente A in einem Anteil von 50 bis 80 Gew.-Teilen, Komponente B in einem Anteil von 0,02 bis 0,07 Gew.- Teilen, Komponente C in einem Anteil von 0,002 bis 0,004 Gew.-Teilen, Komponente D in einem Anteil von 7 bis 50 Gew.-Teilen, Komponente E in einem Anteil von 0 bis 50 Gew.-Teilen und Komponente F in einem Anteil von 0,2 bis 10 Gew.-Teilen zum Einsatz kommen.

6. Verfahren gemäß einem der vorherigen Ansprüche, **dadurch gekennzeichnet, dass** die Komponente B ausgewählt ist aus der Gruppe bestehend aus Ethylendiamintetraessigsäure (EDTA), Nitriloessigsäure, Ethylenglycol-bis(aminoethylether)-N,N,N',N'-tetraessigsäure (EGTA), Diethylentriaminpentaessigsäure (DTPA), Phenylphosphonsäure, p-Toluolsulfonsäure und Substanzen der allgemeinen Formel 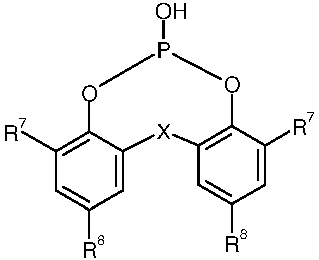 worin
R⁷ und R⁸ gleich oder verschieden sind und für C₁-C₉-Alkyl, C₅-C₆-Cycloalkyl, C₇-C₉-Aralkyl oder C₆-C₁₀-Aryl stehen und
X für -S- oder R⁹-CH mit R⁹ für Wasserstoff, C₁-C₆-Alkyl oder C₅-C₆-Cycloalkyl steht.

7. Verfahren gemäß einem der vorherigen Ansprüche, **dadurch gekennzeichnet, dass** als Komponente B der Phosphorigsäurester gemäß folgender Struktur 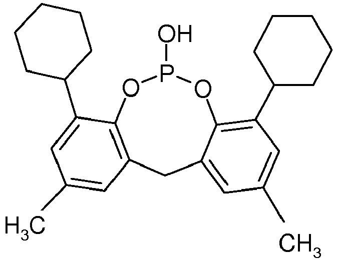 eingesetzt wird.

8. Verfahren gemäß einem der Ansprüche 1 bis 6, **dadurch gekennzeichnet, dass** als Komponente B Ethylendiamintetraessigsäure (EDTA) eingesetzt wird.

9. Verfahren gemäß einem der vorherigen Ansprüche, **dadurch gekennzeichnet, dass** als Komponente C phosphorige Säure (H₃PO₃) eingesetzt wird.

10. Verfahren gemäß einem der vorherigen Ansprüche, **dadurch gekennzeichnet, dass** Komponente D Magnesiumsulfat oder Calciumchlorid enthält.

11. Verfahren gemäß einem der vorherigen Ansprüche, **dadurch gekennzeichnet, dass** in Schritt (i) mindestens eine Komponente mit Polycarbonat zersetzender Wirkung eingesetzt wird.

12. Verwendung von Säuremischungen bestehend aus einer organischen, Brönsted-Säure und einer anorganischen, brönsted-sauren Phosphorverbindung zur Stabilisierung von schlagzähmodifizierten Polycarbonat-Zusammensetzungen, wobei das Gewichtsverhältnis der organischen zur anorganischen Brönsted-Säure im Bereich von 2 bis 100 liegt.

13. Zusammensetzungen erhältlich nach einem der Verfahren gemäß den Ansprüchen 1 bis 11.

14. Verwendung von Zusammensetzungen gemäß Anspruch 13 zur Herstellung von Formkörpern.

15. Formkörper enthaltend eine Zusammensetzung gemäß Anspruch 13.

## Claims

1. Process for producing impact-modified polycarbonate compositions containing the steps (i), (ii) and optionally (iii), wherein
(i) in a first step
A) 10 to 98 parts by weight of at least one polymer selected from the group of aromatic polycarbonates and aromatic polyester carbonates,
B) 0.001 to 0.3 parts by weight of at least one organic Brønsted acid,
C) 0.0001 to 0.004 parts by weight of at least one inorganic Brønsted-acidic phosphorus compound,
D) 1 to 90 parts by weight of at least one rubber-containing vinyl (co)polymer,
E) optionally up to 90 parts by weight of at least one polyester,
F) optionally up to 30 parts by weight of at least one additive,
wherein the ratio of the parts by weight of the components B to C employed in process step (i) is in the range from 2 to 100,
are heated by supplying thermal and/or mechanical energy, at least the components A) and D) are thus melted and all employed components are thus mixed with one another, dissolved in one another or dispersed in one another
and
in a further step (ii)
the melt resulting from process step (i) is (ii) resolidified by cooling
and (iii) optionally pelletized,
wherein the process steps (ii) and (iii) may be performed in any desired sequence relative to one another.

2. Process according to Claim 1, **characterized in that** the component B is employed in step (i) in a proportion of 0.01 to 0.1 parts by weight based on the sum of the parts by weight of the components A to F.

3. Process according to either of Claims 1 and 2, **characterized in that** the component C is employed in step (i) in a proportion of 0.002 to 0.004 parts by weight based on the sum of the parts by weight of the components A to F.

4. Process according to any of the preceding claims, **characterized in that** the ratio of the components B to C is in the range from 8 to 30.

5. Process according to any of the preceding claims, **characterized in that** it employs component A in a proportion of 50 to 80 parts by weight, component B in a proportion of 0.02 to 0.07 parts by weight, component C in a proportion of 0.002 to 0.004 parts by weight, component D in a proportion of 7 to 50 parts by weight, component E in a proportion of 0 to 50 parts by weight and component F in a proportion of 0.2 to 10 parts by weight.

6. Process according to any of the preceding claims, **characterized in that** the component B is selected from the group consisting of ethylenediaminetetraacetic acid (EDTA), nitriloacetic acid, ethylene glycol bis(aminoethylether)-N,N,N',N'-tetraacetic acid (EGTA), diethylenetriaminepentaacetic acid (DTPA), phenylphosphonic acid, p-toluenesulfonic acid and substances of general formula 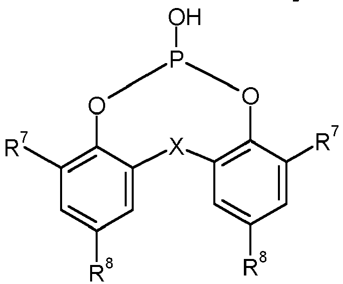 in which
R⁷ and R⁸ are identical or different and represent C₁-C₉-alkyl, C₅-C₆-cycloalkyl, C₇-C₉-aralkyl or C₆-C₁₀-aryl and
X represents -S- or R⁹-CH where R⁹ represents hydrogen, C₁-C₆-alkyl or C₅-C₆-cycloalkyl.

7. Process according to any of the preceding claims, **characterized in that** as component B the phosphorous acid ester having the structure 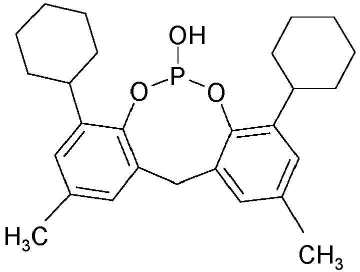 is employed.

8. Process according to any of Claims 1 to 6, **characterized in that** as component B ethylenediaminetetraacetic acid (EDTA) is employed.

9. Process according to any of the preceding claims, **characterized in that** as component C phosphorous acid (H₃PO₃) is employed.

10. Process according to any of the preceding claims, **characterized in that** component D contains magnesium sulfate or calcium chloride.

11. Process according to any of the preceding claims, **characterized in that** in step (i) at least one component having a polycarbonate-decomposing effect is employed.

12. Use of acid mixtures consisting of an organic Brønsted acid and an inorganic Brønsted-acidic phosphorus compound for stabilizing impact-modified polycarbonate compositions, wherein the weight ratio of the organic Brønsted acid to the inorganic Brønsted acid is in the range from 2 to 100.

13. Compositions obtainable by any of the processes according to Claims 1 to 11.

14. Use of compositions according to Claim 13 for producing moulded articles.

15. Moulded article containing a composition according to Claim 13.

## Revendications

1. Procédé pour la préparation de compositions de polycarbonate à résilience modifiée contenant les étapes (i), (ii) et éventuellement (iii),
(i) dans une première étape
A) 10 à 98 parties en poids d'au moins un polymère choisi dans le groupe des polycarbonates aromatiques et des polyestercarbonates aromatiques,
B) 0,001 à 0,3 partie en poids d'au moins un acide de Brönsted, organique,
C) 0,0001 à 0,004 partie en poids d'au moins un composé de phosphore acide selon Brönsted, inorganique,
D) 1 à 90 partie (s) en poids d'au moins un (co)polymérisat de vinyle contenant un caoutchouc,
E) éventuellement jusqu'à 90 parties en poids d'au moins un polyester,
F) éventuellement jusqu'à 30 parties en poids d'au moins un additif,
le rapport des parties en poids des composants B à C utilisés dans l'étape de procédé (i) se situant dans la plage de 2 à 100,
sont chauffés par apport d'énergie thermique et/ou mécanique, au moins les composants A) et D) étant ainsi fondus et tous les composants utilisés étant ainsi mélangés les uns avec les autres, dissous les uns dans les autres ou dispersés les un dans les autres,
et
dans une étape supplémentaire (ii),
la masse fondue (ii) résultant de l'étape de procédé (i) est à nouveau solidifiée par refroidissement et (iii) éventuellement granulée, les étapes de procédé (ii) et (iii) pouvant être mises en œuvre l'une par rapport à l'autre selon un ordre quelconque.

2. Procédé selon la revendication 1, **caractérisé en ce que** le composant B dans l'étape (i) est utilisé en une proportion de 0,01 à 0,1 partie en poids par rapport à la somme des parties en poids des composants A à F.

3. Procédé selon la revendication 1 ou 2, **caractérisé en ce que** le composant C dans l'étape (i) est utilisé en une proportion de 0,002 à 0,004 partie en poids par rapport à la somme des parties en poids des composants A à F.

4. Procédé selon l'une quelconque des revendications précédentes, **caractérisé en ce que** le rapport des composants B à C se situe dans la plage de 8 à 30.

5. Procédé selon l'une quelconque des revendications précédentes, **caractérisé en ce que** le composant A est utilisé en une proportion de 50 à 80 parties en poids, le composant B en une proportion de 0,02 à 0,07 partie en poids, le composant C en une proportion de 0,002 à 0,004 partie en poids, le composant D en une proportion de 7 à 50 parties en poids, le composant E en une proportion de 0 à 50 partie(s) en poids et le composant F en une proportion de 0,2 à 10 partie(s)en poids.

6. Procédé selon l'une quelconque des revendications précédentes, **caractérisé en ce que** le composé B est choisi dans le groupe constitué par l'acide éthylènediaminetétraacétique (EDTA), l'acide nitriloacétique, l'acide éthylèneglycol-bis(aminoéthyléther)-N,N,N',N'-tétraacétique (EGTA), l'acide diéthylènetriaminepentaacétique (DTPA), l'acide phénylphosphonique, l'acide p-toluènesulfonique et des substances de formule générale 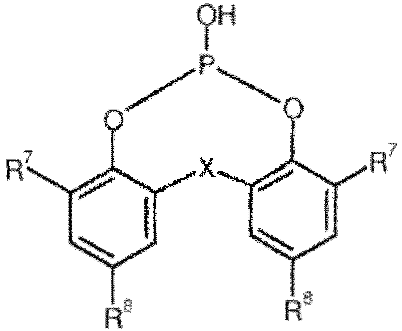 dans laquelle
R⁷ et R⁸ sont identiques ou différents et représentent C₁₋₉-alkyle, C₅₋₆-cycloalkyle, C₇₋₉-aralkyle ou C₆₋₁₀-aryle et
X représente -S- ou R⁹-CH avec R⁹ représentant hydrogène, C₁₋₆-alkyle ou C₅₋₆-cycloalkyle.

7. Procédé selon l'une quelconque des revendications précédentes, **caractérisé en ce qu'**en tant que composant B, l'ester d'acide phosphorique selon la structure suivante est utilisé

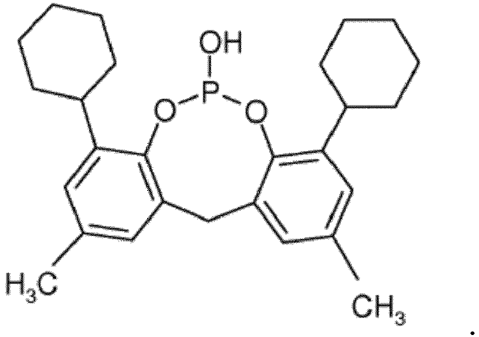

8. Procédé selon l'une quelconque des revendications 1 à 6, **caractérisé en ce qu'**en tant que composant B, l'acide éthylènediaminetétraacétique (EDTA) est utilisé.

9. Procédé selon l'une quelconque des revendications précédentes, **caractérisé en ce qu'**en tant que composant C, l'acide phosphorique (H₃PO₃) est utilisé.

10. Procédé selon l'une quelconque des revendications précédentes, **caractérisé en ce que** le composant D contient du sulfate de magnésium ou du chlorure de calcium.

11. Procédé selon l'une quelconque des revendications précédentes, **caractérisé en ce que** dans l'étape (i) au moins un composant doté d'un effet de décomposition de polycarbonate est utilisé.

12. Utilisation de mélanges d'acides constitués d'un acide de Brönsted, organique et d'un composé de phosphore acide selon Brönsted, inorganique, pour la stabilisation de compositions de polycarbonate à résilience modifiée, le rapport en poids de l'acide de Brönsted organique à inorganique se situant dans la plage de 2 à 100.

13. Compositions pouvant être obtenues par un des procédés selon les revendications 1 à 11.

14. Utilisation de compositions selon la revendication 13 pour la préparation de corps moulés.

15. Corps moulé contenant une composition selon la revendication 13.
